# NEUE EUROPÄISCHE PATENTSCHRIFT

(11) **EP 1 375 684 B2**
(45) Veröffentlichungstag und Bekanntmachung des Hinweises auf die Entscheidung über den Einspruch: **23.10.2013**
(45) Hinweis auf die Patenterteilung: 17.09.2008
(21) Anmeldenummer: 03009096.3
(22) Anmeldetag: 19.04.2003
(51) Int. Cl.: C21D 9/40, C21D 1/10, F16C 19/38, F16C 33/64

(54) **Verfahren zum Herstellen von Lagerringen für Grosswälzlager**
Process for the manufacture of bearing rings for large rolling bearings
Procédé de fabrication de bagues de roulement pour paliers de grandes dimensions

(30) Priorität: 26.06.2002 DE 10228333
(43) Veröffentlichungstag der Anmeldung: 02.01.2004
(73) Patentinhaber: Rothe Erde GmbH, 44137 Dortmund (DE)
(72) Erfinder: Bracht, Josef, 59597 Erwitte (DE); Rollmann, Jörg, Dr.-Ing., 45731 Waltrop (DE); Stakemeier, Bernd, 59597 Erwitte (DE); Wozniak, Johannes, Dr.-Ing., 59555 Lippstadt (DE)
(74) Vertreter: Albrecht, Rainer Harald

(56) Entgegenhaltungen:
- EP-A1- 0 940 682
- DE-A- 19 955 385
- DE-A1- 2 734 916
- DE-A1- 19 612 162
- US-A- 4 759 808
- US-A- 5 134 264
- US-A- 5 796 078
- PATENT ABSTRACTS OF JAPAN Bd. 1999, Nr. 14, 22. Dezember 1999 (1999-12-22) & JP 11 242992 A (FUJI DENSHI KOGYO KK), 7. September 1999 (1999-09-07)
- PATENT ABSTRACTS OF JAPAN Bd. 0093, Nr. 06 (C-317), 3. Dezember 1985 (1985-12-03) & JP 60 141827 A (DENKI KOGYO KK), 26. Juli 1985 (1985-07-26)

## Beschreibung

Die Erfindung betrifft ein Verfahren zum Herstellen eines Lagerrings für Großwälzlager mit mindestens einer Laufbahn mit gehärteter Randschicht, die neben einem nicht zu harten den Bereich liegt, bei dem die zu härtende Randschicht zum Erwärmen - während der Lagerring um seine eigene Achse rotiert wird - dem elektromagnetischen Feld mindestens eines ringförmigen Induktors zur gleichen Zeit unter Wahrung eines Abstandes vollständig ausgesetzt und nach dem Erwärmen durch den Induktor in ihrer Gesamtheit zur gleichen Zeit abgeschreckt wird.

Unter Großwälzlagern sind in dem hier angesprochenen Zusammenhang Wälzlager zu verstehen, deren Lagerringe über axial eingebrachte Durchgangs- oder Gewindebohrungen mit den Anschlußkonstruktionen verschraubt sind. Großwälzlager können je nach Ausführung eine Rollenreihe oder auch mehrere Rollenreihen aufweisen; jeder Rollenreihe sind dabei zwei Laufbahnen zugeordnet, die in zwei bis drei Lagerringen-spanend gefertigt und anschließend gehärtet werden. Diese Lagerringe können als Nasenringe, Tragringe, Halteringe, scheibenförmige Axialringe etc. ausgebildet sein.

Die Laufbahnen der Lagerringe von Großwälzlagern werden nach einem bekannten Verfahren induktiv im Vorschub gehärtet (induktives Vorschubhärten); dabei sind eine Induktionsspule (Induktor) und eine daran befestigte Brause über einem im Verhältnis zum Ringdurchmesser kleinen Segment der zu härtenden Laufbahn angeordnet. Zum Härten überstreichen Induktor und Brause einmalig die Kontur der Laufbahn des Lagerringes in Umfangsrichtung bei konstantem Vorschub des Lagerrings, so dass kontinuierlich jedes Segment der Laufbahn erwärmt und abgeschreckt (gehärtet) wird. Der wesentliche Nachteil dieses Verfahrens liegt in einem kleinen, verfahrensbedingt unvollständig gehärteten Segment (Schlupf) am Endpunkt der Härtung, in dessen Bereich die Laufbahn weich bleibt und somit die Trägfähigkeit des Lagers reduziert ist (vgl. US 4,363,946 A).

Es ist außerdem bekannt, die Laufbahnen der Lagerringe von Großwälzlagern mit Acetylen-Sauerstoff-Flammen zu erwärmen und anschließend in einem Öl- oder Emulsionsbad abzuschrecken. Bei diesem sogenannten Flammhärteverfahren werden über dem Umfang der zu härtenden Laufbahn mehrere Brenner gleichmäßig verteilt angeordnet und durch Rotation des Lagerrings um seine - in der Regel senkrecht angeordnete - Achse eine gleichzeitige sowie gleichmäßige Erwärmung auf dem gesamten Lagerring-Umfang erzielt. Unmittelbar nach Erreichen der vorgegebenen Temperatur in der zu härtenden Laufbahn des Lagerrings werden die Brenner abgeschaltet und der Lagerring zum Abschrecken in ein Öl- oder Emulsionsbad getaucht. Die wesentlichen Nachteile dieses bekannten Verfahrens liegen zum einen in der Gefährdung der Bedienungsperson durch die Handhabung explosibler Gasgemische und in der erheblichen Geräuschentwicklung. Zum anderen lassen sich die Erwärmungsbedingungen nur eingeschränkt genau steuern, so daß sich vielfach ungünstige Festigkeitseigenschaften (geringe Härte, grobes Korn) in der gehärteten Laufbahn ergeben, welche die Tragfähigkeit des betreffenden Lagers reduzieren.

Die unter der Nummer Sho60-141827 vorveröffentlichte japanische Patentanmeldung beschreibt ein Verfahren zur Herstellung mindestens einer eine nutenartige Vertiefung aufweisenden Laufbahn mit gehärteter Randschicht, bei dem die zu härtende Randschicht zum Erwärmen - während das die Laufbahn enthaltende Zylinderelement um seine eigene Achse rotiert wird - dem elektromagnetischen Feld mindestens eines Induktors zur gleichen Zeit unter Wahrung eines Abstandes vollständig ausgesetzt und nach dem Erwärmen durch den Induktor durch Aufsprühen eines Kühlmittels abgeschreckt wird.

Soweit das bekannte Verfahren in der zuvor erwähnten Weise konventionell, d.h. mit über den Umfang der Laufbahn gleichbleibendem Abstand zwischen Laufbahn und Induktor, ausgeführt wird, wird letzterer zur Erzielung einer intensiven Heizwirkung derart ausgebildet, daß er möglichst nahe an die betreffende Laufbahn heranreicht.

Der Erfindung liegt die Aufgabe zugrunde, ein Verfahren zum Herstellen von Lagerringen für Großwälzlager anzugeben, mit dem in den Laufbahnen umlaufend gleichbleibend (schlupflos) eine hohe Härte und ein feinkörniges Gefüge eingestellt werden können.

Diese Aufgabe wird bei einem Verfahren der eingangs erwähnten Gattung dadurch gelöst, daß der Lagerring vor dem Erwärmen durch den Induktor mit einem Freistich versehen wird, der die zu härtende Randschicht von dem nicht zu härtenden Bereich oberflächenmäßig trennt, und daß der Abstand (d.h. der sogenannte Kupplungsabstand) des Induktors von der Oberfläche der zu härtenden Randschicht im Falle einer radialen Laufbahn das 1- bis 2-fache der Randhärtetiefe beträgt; im Falle einer axialen Laufbahn, die an der Innenfläche des Lagerrings angrenzt, am Außenrand das 0,6- bis 1-fache der Randhärtetiefe und am Innenrand das 1,5- bis 2-fache der Randhärtetiefe beträgt, wobei sich der Abstand vom Außenrand zum Innenrand stetig verändert, und im Falle einer axialen Laufbahn, deren Innendurchmesser größer ist als derjenige der Innenfläche des Lagerrings, einheitlich das 0,6 bis 1-fache der Randhärtetiefe beträgt. Die Umfangsgeschwindigkeit des rotierenden Lagerrings liegt dabei vorzugsweise in der Größenordnung um 0,2 Meter/Sekunde.

Mit dem erfindungsgemäßen Verfahren wird nicht nur eine gleichmäßige, schlupflose Härtung der gesamten Laufbahn erreicht; im Vergleich zu den bisher bekannten Verfahren läßt sich auch die Dauer des Härteprozesses erheblich verkürzen.

Vorteilhafte Weiterbildungen der Erfindung ergeben sich aus den Unteransprüchen.

Laufbahnen für die Lagerringe von Großwälzlagern können als radiale oder axiale Laufbahnen ausgebildet sein. Dabei sind radiale Laufbahnen radial zur Drehachse des Lagers belastbar und, soweit zylindrische Wälzkörper verwendet werden, mit zylindrischer Oberfläche ausgebildet.

Axiale Laufbahnen sind in Richtung der Drehachse des Lagers belastbar und können beispielsweise durch eine ebene, senkrecht zur Drehachse angeordnete Kreisringfläche gebildet sein.

Die Bestimmung, daß neben der gehärteten Randschicht ein nicht zu härtender benachbarter Bereich vorhanden ist, schließt im Falle einer zylindrisch ausgebildeten radialen Außenlaufbahn einen Materialbereich ein, der wahlweise den gleichen, einen kleineren oder einen größeren Außendurchmesser aufweist wie bzw. als die radiale Laufbahn, und im Falle einer ebenen axialen Laufbahn einen Bereich mit einer Oberfläche, die in der gleichen Ebene liegt oder in einem Bereich, der gegenüber der axialen Laufbahn erhaben oder zurückgesetzt ausgebildet ist.

Dabei ist weiter vorgesehen, daß der Freistich mit einer Tiefe in den Lagerring eingebracht wird, die dem 1- bis 2-fachen der Randhärtetiefe entspricht.

Um einen Lagerring - der neben der zu härtenden Laufbahn einen benachbarten abgestuften und nicht zu härtenden Bereich aufweist - vorschriftsmäßig zu härten und den abgestuften Bereich in seinen Festigkeitseigenschaften unbeeinflußt zu lassen, ist nach der Erfindung weiter vorgesehen, daß der Induktor zu dem benachbarten abgestuften Bereich des Lagerrings in einem seitlichen Abstand gehalten wird, der das 1,5- bis 2-fache der Randhärtetiefe beträgt. Ein benachbarter abgestufter Bereich in diesem Sinne ist im Falle einer zu härtenden axialen Laufbahn ein Bereich mit einer angrenzenden radialen Fläche und im Falle einer zu härtenden radialen Laufbahn ein Bereich mit einer angrenzenden axialen Stirnfläche.

Das Verfahren läßt sich mittels einer Vorrichtung durchführen, bei welcher die der zu härtenden Laufbahn zum Erwärmen zugewandte Fläche des Induktors im wesentlichen gleich der Oberfläche zu härtenden Laufbahn ist; der Induktor kann dabei ein- oder mehrwindig ausgebildet sein.

Ausführungsbeispiele der Erfindung sind in der Zeichnung jeweils in einem auszugsweisen schematischen Querschnitt dargestellt und werden im folgenden näher erläutert.

Es zeigen:
- Fig. 1: einen Lagerring mit einer inneren Radiallaufbahn und einem ringförmigen Induktor, wobei die Radiallaufbahn bezüglich des Lagerrings mittig angeordnet ist und ihre Breite lediglich einen Bruchteil der Breite des Lagerrings beträgt,
- Fig. 2: einen Lagerring mit einer äußeren Radiallaufbahn und einem Induktor, wobei die Radiallaufbahn bezüglich des Lagerrings mittig angeordnet ist und ihre Breite lediglich einen Bruchteil der Breite des Lagerrings beträgt,
- Fig. 3: einen Haltering mit einer Käfiganlage und einer inneren Radiallaufbahn sowie einem Induktor,
- Fig. 4: einen Haltering mit einer Käfiganlage und einer äußeren Radiallaufbahn sowie einem Induktor,
- Fig. 5: einen Lagerring mit einer axialen Laufbahn, die sich von der Mitte des Lagerrings bis zu dessen Umfangsfläche erstreckt, sowie einen Induktor,
- Fig. 6: einen Lagerring mit einer axialen Laufbahn, die sich von der Innenfläche des Lagerrings bis zu dessen Mitte erstreckt, und einen Induktor,
- Fig. 7: einen Axialring mit außenliegender axialer Laufbahn und innen angeordneter Käfiganlage sowie einen Induktor,
- Fig. 8: einen Axialring mit innenliegender axialer Lauffläche und außen angeordneter Käfiganlage sowie einen Induktor,
- Fig. 9: eine dreireihige Rollendrehlagerung und
- Fig. 10: den in Fig. 9 dargestellten Nasenring mit diesem zugeordneten Induktoren.

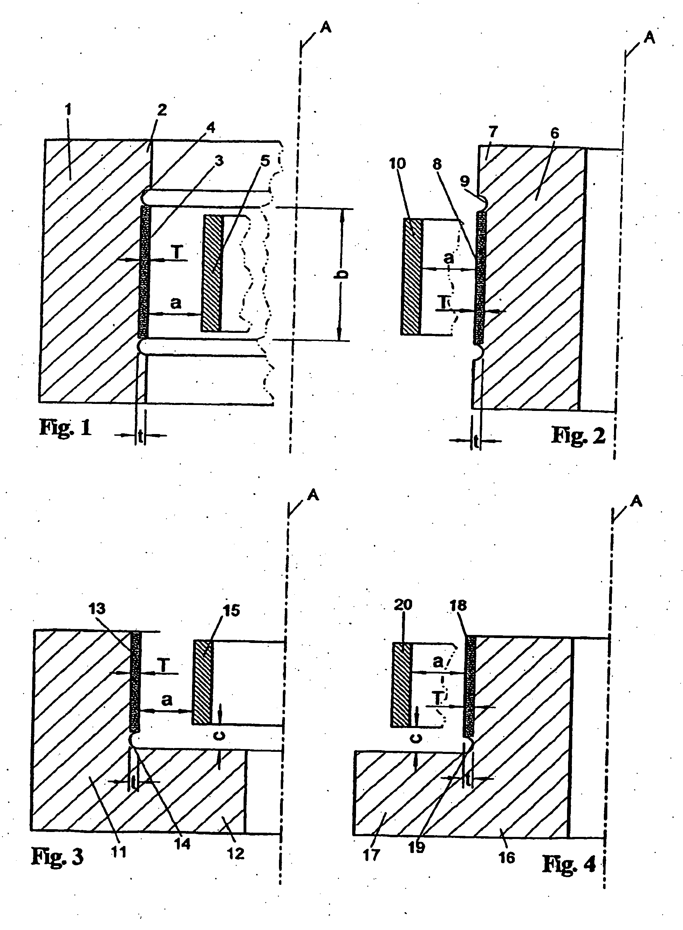

Die Darstellung nach Fig. 1 zeigt einen äußeren Lagerring oder Lageraußenring 1, der an seiner Innenfläche eine mittig angeordnete Radiallaufbahn 3 - deren Breite b kleiner ist als die Breite des gesamten Lageraußenrings - und jeweils an den Stirnseiten des Lageraußenrings endende, nicht zu härtende Bereiche 2 aufweist. Dabei ist die Radiallaufbahn 3 von den Bereichen 2 jeweils durch einen Freistich 4 oberflächenmäßig getrennt.
Der Bereich der Radiallaufbahn 3 weist eine Randhärtetiefe T und der Freistich eine Tiefe t auf, die das 1- bis 2-fache der Randhärtetiefe T beträgt. Zum Erwärmen des Laufbahnbereichs ist ein ringförmiger, mehrwindiger Induktor 5 vorgesehen, dessen Breite im wesentlichen der Breite b der Radiallaufbahn 3 entspricht oder geringfügig kleiner ist als diese. Der Außendurchmesser des Induktors 5 ist um zweimal den Kopplungsabstand a kleiner als der Innendurchmesser der Innenfläche des Lageraußenrings 1 bzw. der Radiallaufbahn 3. Der Kopplungsabstand a liegt dabei vorzugsweise in einem Bereich zwischen dem 1- bis 2-fachen der Randhärtetiefe T.

Bei der Ausführungsform nach Fig. 2 ist ein innerer Lagerring oder Lagerinnenring 6 mit einer äußeren radialen Laufbahn 8 ausgestattet. Diese ist bezüglich des Lagerinnenrings mittig ausgebildet und liegt zwischen zwei nicht zu härtenden Bereichen 7, die sich ihrerseits jeweils bis zur in Betracht kommenden Stirnfläche (d.h. in Fig. 2 oben oder unten liegend) erstrecken. Die Laufbahn 8 ist von den Bereichen 7 jeweils durch einen Freistich 9 abgetrennt, dessen Abmessung im wesentlichen derjenigen des Freistichs 4 nach Fig. 1 entspricht.
Für die Erwärmung des Bereichs der Laufbahn 8 ist ein Induktor 10 vorgesehen, der konzentrisch um die Achse A des Lagerinnenrings 6 angeordnet und dessen Durchmesser um den doppelten Kopplungsabstand a größer ist als der Außendurchmesser des Lagerinnenrings 6. Die Breite des Induktors 10 entspricht wieder im wesentlichen der Breite der Laufbahn 8 oder ist geringfügig kleiner als diese.

In Abwandlung der Ausführungsbeispiele nach Fig. 1 und 2 kann die Erfindung auch an Ausführungsformen zum Einsatz kommen, bei denen die Radiallaufbahn 3 und/oder die Laufbahn 8 sich an einer Seite oder an beiden Seiten bis zur Stirnfläche des Lageraußenrings 1 bzw. des Lagerinnenrings 6 erstrecken. Zum Härten eines derartig abgewandelten Lagerrings wird erfindungsgemäß lediglich die Breite des Induktors 5 bzw. des Induktors 10 entsprechend angepaßt.

Eine weitere Abwandlung der Lagerringe gemäß Fig. 1 und 2 zeigen die Fig. 3 und 4.
Bei den hier angesprochenen Lagerringen 11 bzw. 16 geht die zu härtende Laufbahn 13 bzw. 18 jeweils von einer Stirnseite des betreffenden Lagerrings aus und erstreckt sich im wesentlichen bis zur Mitte des Lagerrings, wo sie durch einen Freistich 14 bzw. 19 oberflächenmäßig von einem nicht zu härtenden Käfiganlageflansch 12 bzw. 17 getrennt ist. Die Abmessungen der zugeordneten Induktoren 15 bzw. 20 sowie der Kopplungsabstand a und die Freistichtiefe t entsprechen den anhand der Fig. 1 und 2 erläuterten Angaben.
Zur Erzielung einer einwandfreien Durchhärtung des Laufbahnbereichs ist dafür Sorge zu tragen, daß der seitliche Abstand c zwischen dem Induktor 15 bzw. 20 und der diesem zugewandten Stirnfläche des Käfiganlageflansches 12 bzw. 17, die jeweils neben der Laufbahn 13 bzw. 18 bzw. benachbart zu dieser angeordnet ist, im Bereich zwischen dem 1- bis 2-fachen der Randhärtetiefe T liegt.

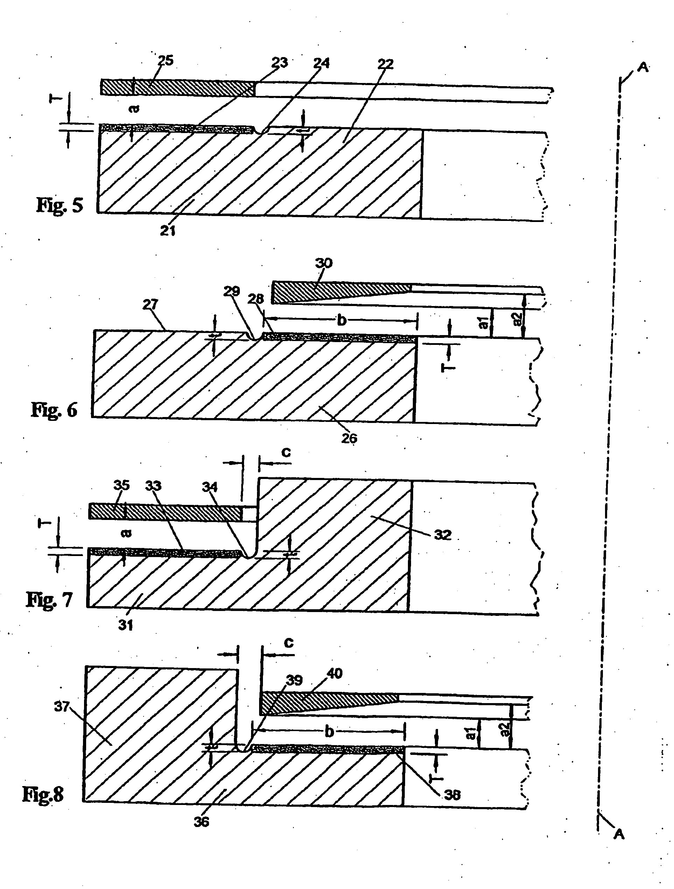

In den Fig. 5 bis 8 sind Ausführungsbeispiele betreffend zu härtende Axiallaufbahnen dargestellt. Im Falle des Lagerrings 21 gemäß Fig. 5 nimmt die zu härtende Laufbahn 23 den äußeren Teil der Stirnfläche ein und endet an der Umfangsfläche des Lagerrings 21. Der sich bis zu dessen Innenfläche erstreckende, nicht zu härtende Bereich 22, der sich neben der Laufbahn 23 befindet, ist wiederum durch einen Freistich 24 von letzterer oberflächenmäßig getrennt.
Der zum Erwärmen der Laufbahn 23 vorgesehene Induktor 25 weist im wesentlichen die gleiche Ringfläche auf wie die Laufbahn 23 und liegt dieser in einem Kopplungsabstand a gegenüber, welcher ebenso wie die Einstichtiefe t entsprechend den Ausführungsbeispielen nach Fig. 1 und 2 bemessen ist.

Bei dem Lagerring 26 gemäß Fig. 6 ist die eine Breite b aufweisende axiale Laufbahn 28 bündig mit der Innenfläche des Lagerrings abschließend angeordnet. Zum Erwärmen dieser Laufbahn 28 ist ein Induktor 30 vorgesehen, dessen der Laufbahn zugewandte Fläche die Mantelfläche eines Kegelstumpfes darstellt, wobei der Kopplungsabstand a1 am Außenumfang kleiner ist als der Kopplungsabstand a2 an der Innenseite des Induktors 30. Dabei entspricht der kleinere Kopplungsabstand a1 im wesentlichen dem Kopplungsabstand a gemäß Ausführungsbeispiel nach den Fig. 1 und 2, während der größere Kopplungsabstand a2 in einem Bereich zwischen dem 1,5- bis 2-fachen der Randhärtetiefe liegt und damit im wesentlichen doppelt so groß ist wie der Kopplungsabstand a1.
Die Laufbahn 30 ist wiederum durch einen Freistich 29 von dem zur Umfangsfläche des Lagerrings 26 hin orientierten, nicht zu härtenden Randbereich 27 oberflächenmäßig getrennt.

Die Lagerringe 31 gemäß Fig. 7 und 36 gemäß Fig. 8 weisen jeweils einen zylinderringförmigen Abschnitt 32 bzw. 37 auf, der jeweils über die Laufbahn 33 bzw. 38 hinausragt und als Käfiganlage dient.
Auch in diesem Fall sind die Laufbahnen 33 und 38 von den neben ihnen angeordneten Abschnitten oder Bauteilen 32, 37 jeweils durch einen Freistich 34 bzw. 39 getrennt.

Dabei erstreckt sich die Laufbahn 33 über den äußeren Teil des Lagerrings 31 bis zu dessen Umfangsfläche, während die Laufbahn 38 den inneren Teil des Lagerrings 36 belegt und sich bis zu dessen Innenfläche erstreckt. Zum Erwärmen der Laufbahn 33 (Fig. 7) kann der gleiche Induktor benutzt werden wie zum Erwärmen der Laufbahn 23 des Lagerrings 21 gemäß Fig. 5; dabei ist dafür Sorge zu tragen, daß der seitliche Abstand c des Induktors 35 zu dem Abschnitt 32 die erforderliche Größe aufweist.
Zum Erwärmen der Laufbahn 38 kann der gleiche Induktor 40 verwendet werden wie zum Erwärmen der Laufbahn 28 des Lagerrings 26, wobei auch die Kopplungsabstände a1 und a2 in der anhand der Fig. 6 beschriebenen Weise auszubilden sind.

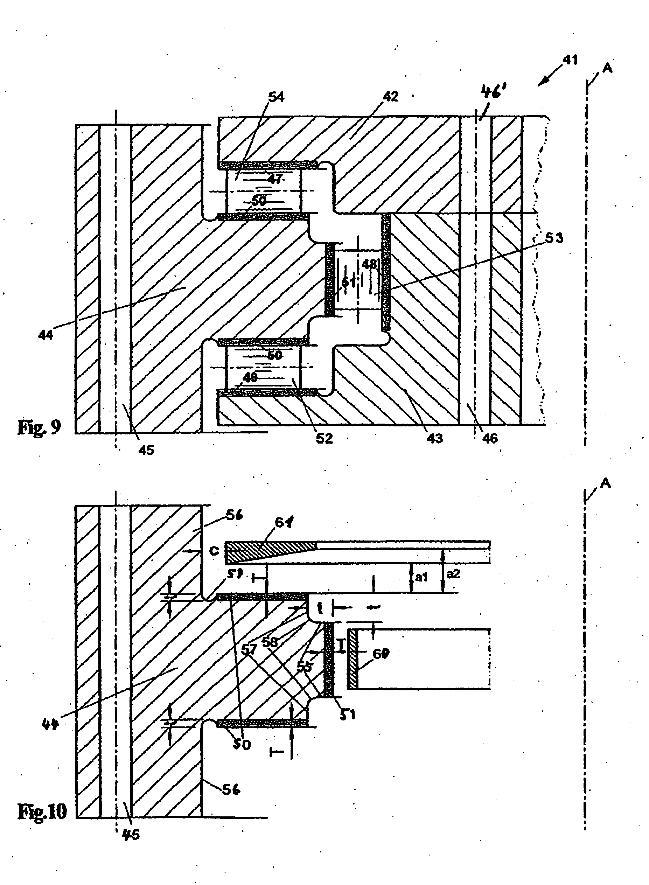

Fig. 9 zeigt ein dreireihiges Rollenlager 41 mit der Drehachse A, das einen Außen- oder Nasenring 44 und eine Innenringanordnung - bestehend aus einem Tragring 43 und einem Haltering 42 - aufweist.
Der Nasenring 44 ist nebst zwei Induktoren nochmals in Fig. 10 dargestellt.

Der Tragring 43 und der Haltering 42 weisen jeweils parallel zur Lagerachse A ausgerichtete, miteinander fluchtende Bohrungen 46 bzw. 46' zur Aufnahme (nicht dargestellter Bolzen) auf, welche die beiden Ringe 42, 43 miteinander zu der gemeinsamen Innenringanordnung und diese ihrerseits mit einer nicht dargestellten Anschlußkonstruktion verbinden. Der Nasenring 44 weist ebenfalls parallel zur Achse A ausgerichtete Ausgangsbohrungen 45 zur Aufnahme von Bolzen auf, mittels welcher der Nasenring an einer Basiskonstruktion befestigt werden kann.

Während der Tragring 43 (in der Darstellung unten) eine axiale Laufbahn 49 und eine radiale Außenlaufbahn 48 aufweist, ist der Haltering 42 (in der Darstellung oben) mit einer axialen Laufbahn 47 ausgestattet.
An der in der Darstellung rechts liegenden Innenseite des Nasenrings 44 ist ein ringoder flanschförmiger Vorsprung ausgebildet, welcher eine innere radiale Laufbahn 51 sowie eine obere und eine untere axiale Innenlaufbahn 50 aufnimmt. Die Anschlußkonstruktion stützt sich über die Innenringanordnung 42, 43 an den Laufbahnen 50 und 51 des Nasenrings 44 ab, und zwar unter Zwischenschaltung einerseits von Radialrollen 53 und andererseits von in axialer Richtung wirksamen Axialrollen 52 bzw. 54. Die genannten Wälzkörper sind jeweils in nicht dargestellten Rollenkäfigen zusammengefaßt, die jeweils an den entsprechenden Teilen der Ringe 42 bis 44 geführt werden.

Wie die Darstellung gemäß Fig. 10 erkennen läßt, sind die nicht zu härtenden Bereiche 55 und 57, welche der inneren radialen Laufbahn 51 bzw. den beiden axialen Innenlaufbahnen 50 benachbart sind, oberflächenmäßig jeweils durch einen Freistich 58 mit der Tiefenabmessung t oberflächenmäßig abgetrennt.
Entsprechendes gilt hinsichtlich der nicht zu härtenden Bereiche 56, welche sich an die Innenlaufbahnen 50 anschließen und sich bis zur unten bzw. oben liegenden Stirnseite des Nasenrings 44 erstrecken; die genannten Bereiche 56 sind jeweils durch einen Freistich 59 von der benachbarten axialen Innenlaufbahn beabstandet.

Die Erwärmung der in Betracht kommenden Laufbahnbereiche des Rollenlagers 41 kann grundsätzlich in der weiter oben beschriebenen Weise durchgeführt werden. Zur Einwirkung auf die Randschicht der radialen Innenlaufbahn 51 ist gemäß Fig. 10 ein Induktor 60 vorgesehen, der im wesentlichen dem Induktor 5 gemäß Fig. 1 entspricht.
Der zum Erwärmen der Randschicht der oberen axialen Innenlaufbahn 50 vorgesehene Induktor 61 entspricht im wesentlichen dem Induktor 41 gemäß Fig. 8, wobei die Größen a1, a2, c und t in der zuvor beschrieben Weise bemessen sind. Auf die untere axiale Innenlaufbahn 50 kann ebenfalls mittels des Induktors 61 eingewirkt werden, wobei dessen Anordnung an die andersartige Ausrichtung der unteren axialen Innenlaufbahn 50 angepaßt werden muß.
Im übrigen wird das erfindungsgemäße Verfahren derart ausgeführt, daß die in Fig. 10 dargestellten Induktoren 60 und 61 jeweils zeitlich getrennt zum Einsatz kommen und der Nasenring 44 nach Erwärmen der betreffenden Laufbahn (obere bzw. untere axiale Innenlaufbahn 50, radiale Innenlaufbahn 51) jeweils abgeschreckt wird.

Wegen der Behandlung der oberen und unteren axialen Innenlaufbahn 50 wird beispielsweise auf die Ausführungen zu Fig. 7 Bezug genommen.
Die radiale Außenlaufbahn 48 kann in der Weise behandelt werden, wie sie anhand der Fig. 4 erläutert worden ist.

## Patentansprüche

1. Verfahren zum Herstellen eines Lagerrings für Großwälzlager mit mindestens einer Laufbahn mit gehärteter Randschicht, die neben einem nicht zu härtenden Bereich liegt, bei dem die zu härtende Randschicht zum Erwärmen - während der Lagerring um seine eigene Achse (A) rotiert wird - dem elektromagnetischen Feld mindestens eines ringförmigen Induktors zur gleichen Zeit unter Wahrung eines Abstandes vollständig ausgesetzt und nach dem Erwärmen durch den Induktor in ihrer Gesamtheit zur gleichen Zeit abgeschreckt wird, **dadurch gekennzeichnet, dass** der Lagerring vor dem Erwärmen durch den Induktor mit einem Freistich versehen wird, der die zu härtende Randschicht von dem nicht zu härtenden Bereich oberflächenmäßig trennt, und dass der Abstand (a, a1, a2) des Induktors von der Oberfläche der zu härtenden Randschicht
- im Falle einer radialen Laufbahn (48, 51) das 1- bis 2-fache der Randhärtetiefe (T) beträgt;
- im Falle einer axialen Laufbahn (47, 49, 50), die an der Innenfläche (51) des Lagerrings angrenzt, am Außenrand (a1) das 0,6- bis 1-fache der Randhärtetiefe (T) und am Innenrand (a2) das 1,5- bis 2-fache der Randhärtetiefe (T) beträgt, wobei sich der Abstand (a1, a2) vom Außenrand zum Innenrand hin stetig verändert; und
- im Falle einer axialen Laufbahn (49), deren Innendurchmesser größer ist als derjenige der Innenfläche (48) des Lagerrings, einheitlich das 0,6- bis 1-fache der Randhärtetiefe (T) beträgt.

2. Verfahren nach Anspruch 1, **dadurch gekennzeichnet, dass** der Freistich mit einer Tiefe (t) in den Lagerring eingebracht wird, die dem 1- bis 2-fachen der Randhärtetiefe (T) entspricht.

3. Verfahren nach Anspruch 1, **dadurch gekennzeichnet, dass** der Induktor zu einem benachbarten abgestuften und nicht zu härtenden Bereich des Lagerrings in einem seitlichen Abstand (c) angeordnet ist, der das 1,5- bis 2-fache der Randhärtetiefe (T) beträgt.

## Claims

1. A method for the manufacture of bearing rings for large roller bearings comprised of at least one bearing race with a hardened surface layer, wherein for heating, the surface layer to be hardened is completely exposed to the electromagnetic field of the at least one annular inductor at the same time while the bearing ring is rotated about its own axis (A), maintaining a certain spacing, and wherein this hardened surface layer after being heated by the inductor is quenched in its entirety at the same time, **characterized in that** the bearing ring is provided with a relief prior to heating by the inductor, said relief surface-wise separating the surface layer to be hardened from the region not to be hardened, and that the spacing (a, a1, a2) of the inductor from the surface of the surface layer to be hardened
- amounts to 1 to 2 times the hardened surface depth (T) in the case of a radial bearing race (48, 51);
- amounts to 0.6 to 1 times the hardened surface depth (T) at the outer edge (a1) and at the inner edge (a2) amounts to 1.5 to 2 times the hardening layer depth (T) in the case of an axial bearing race (47, 49, 50) adjoining at the inner face (51) of the bearing ring, with the spacing (a1, a2) varying continuously from the outer edge toward the inner edge; and
- uniformly amounts to 0.6 to 1 times the hardened surface depth (T) in the case of an axial bearing race (49) whose inner diameter is larger than the one of the inner surface (48) of the bearing ring.

2. The method according to claim 1, **characterized in that** the relief is brought into the bearing ring with a depth (t) which corresponds to 1 to 2 times the hardened surface depth (T).

3. The method according to claim 1, **characterized in that** the inductor is arranged towards an adjacent stepped and not to be hardened region of the bearing ring at a lateral spacing (c) which amounts to 1.5 to 2 times the hardened surface depth (T).

## Revendications

1. Procédé de production d'une bague de roulement pour des roulements de grandes dimensions, avec au moins un chemin de roulement à couche marginale trempée qui se situe à côté d'une zone qu'il ne faut pas tremper, sur lequel pour le réchauffement, on expose totalement, en même temps, en gardant un écart la couche marginale qu'il faut tremper (pendant que l'on fait tourner la bague de roulement autour de son propre axe (A) au champ électromagnétique d'au moins un inducteur annulaire et après le réchauffement par l'inducteur, on la trempe dans sa totalité, en même temps, **caractérisé en ce qu'**avant le réchauffement par l'inducteur, on munit la bague de roulement d'une rainure de dégagement qui sépare en superficie la couche marginale qu'il faut tremper de la zone qu'il ne faut pas tremper et **en ce que** l'écart (a, a1, a2) entre l'inducteur et la superficie de la couche marginale qu'il faut tremper+
- correspond à de 1 à 2 fois la profondeur de trempe marginale dans le cas d'un chemin de roulement (48, 51) radial ;
- correspond à de 0,6 à 1 fois la profondeur de trempe marginale (T) sur le bord extérieur (a1) et à de 1,5 à 2 fois la profondeur de trempe marginale (T) sur le bord intérieur (a2) dans le cas d'un chemin de roulement (47, 49, 50) axial, l'écart (a1, a2) se modifiant en continu, du bord extérieur vers le bord intérieur ; et
- dans le cas d'un chemin de roulement (49) axial, son diamètre intérieur étant supérieur à celui de la surface intérieure (48) de la bague de roulement, correspond uniformément à de 0,6 à 1 fois la profondeur de trempe marginale (T).

2. Procédé selon la revendication 1, **caractérisé en ce qu'**on ménage la rainure de dégagement dans la bague de roulement avec une profondeur (t) qui correspond à de 1 à 2 fois la profondeur de trempe marginale (T).

3. Procédé selon la revendication 1, **caractérisé en ce que** l'inducteur est disposé avec un écart (c) latéral par rapport à une zone voisine échelonnée et qu'il ne faut pas tremper de la bague de roulement, qui correspond à de 1,5 à 2 fois la profondeur de trempe marginale (T).
